# EUROPEAN PATENT SPECIFICATION

(11) **EP 1 981 210 B1**
(45) Date of publication and mention of the grant of the patent: **17.10.2012**
(21) Application number: 07701995.8
(22) Date of filing: 08.01.2007
(51) Int. Cl.: H04L 12/24, H04L 29/08

(54) **A DEVICE MANAGEMENT METHOD OF COMMUNICATION TERMINAL AND A COMMUNICATION TERMINAL AND SYSTEM THEREOF**
EINRICHTUNGSVERWALTUNGSVERFAHREN EINES KOMMUNIKATIONSENDGERÄTS UND KOMMUNIKATIONSENDGERÄT UND SYSTEM DAFÜR
PROCÉDÉ DE GESTION DE DISPOSITIF POUR TERMINAL DE COMMUNICATION, ET TERMINAL DE COMMUNICATION ET SYSTÈME CORRESPONDANTS

(30) Priority: 24.01.2006 CN 200610023603; 04.04.2006 CN 200610074245
(43) Date of publication of application: 15.10.2008
(73) Proprietor: Huawei Technologies Co., Ltd., Longgang District, Shenzhen Guangdong 518129 (CN)
(72) Inventor: LI, Kepeng, Guangdong 518129 (CN); SANG, Zhuo, Guangdong 518129 (CN); DONG, Xiaoyi, Guangdong 518129 (CN); CHAI, Xiaoqian, Guangdong 518129 (CN)
(74) Representative: Kreuz, Georg Maria
(86) International application number: PCT/CN2007/000063
(87) International publication number: WO 2007/085178

(56) References cited:
- EP-A2- 1 032 230
- WO-A1-2004/054205
- WO-A1-2005/121989
- CN-A- 1 453 938
- US-A1- 2005 166 266
- Open Mobile Alliance: "Software Component Management Object, Draft Version 1.0"[Online] 4 April 2005 (2005-04-04), pages 1-28, XP002595553 Retrieved from the Internet: URL:http://member.openmobilealliance.org/f tp/Public_documents/DM/SCOMO/2005/OMA-DM-S COMO-2005-0002R01-Software_Component_Manag ement-.zip> [retrieved on 2010-08-05]
- Open Mobile Alliance: "DM Scheduling Architecture, Draft Version 1.0"[Online] 18 October 2005 (2005-10-18), pages 1-14, XP002595554 Retrieved from the Internet: URL:http://member.openmobilealliance.org/f tp/Public_documents/DM/Scheduling/Permanen t_documents/OMA-AD-DM-Scheduling-V1_0-2005 1018-D.zip> [retrieved on 2010-08-05]

## Description

### Field of the Invention

The present invention relates to communication technologies, in particular, to a method for managing a communication terminal device, a communication terminal and a communication system.

### Background of the Invention

At present, the number of mobile phone users approaches 2 hundred millions in China. As the user requirements become more and more diversified and individualized, the innovation of Chinese telecommunication becomes deeper and deeper, and as fixed phones and mobile phones are reassembled and perfected, the service providers begin to provide more and more abundant services to users, such as Broadcast (BCAST) service, Voice over Internet Protocol (VoIP) service, Push-to-Talk Over Cellular (PoC) service, etc.

VoIP is a technology that is implemented mainly based on IP (Internet Protocol) phone and that provides corresponding value-added services. With VoIP, transferring of service information including voice, fax, video and data, such as storing and forwarding of a virtual phone, Internet call management, television conference and various information may be implemented on an IP network at low cost.

A VoIP system that is suitable for a Mobile Terminal (MT) is defined by the PoC service. By using the packet switching capability of the wireless data network, the PoC service is unlimited by geographic locations.

The Open Mobile Alliance (OMA) is working on the standardization of PoC service. The OMA's PoC solution is based on the Session Initiation Protocol (SIP) and RealTime Transfer Protocol (RTP) defined by the Internet Engineering Task Force (IETF).

With the development of communication technologies, the scale of network becomes larger and larger, and its architecture becomes more and more complex. To improve the Quality of Service (QoS) and lower the operation cost, an effective network management system needs to be established. As a result, Telecommunications Management Networks (TMN) emerge as the times require.

TMN provides a policy and a method for planning, supervising, designing and controlling telecommunication resources, network activities, services and managements, and it provides a system with telecommunication network Operation Administration Maintenances (OAM) functions for operators/managers and terminal users. By employing a management network over all the telecommunication networks, not only an overall and effective supervision and management on the network resources may be realized, but also the network systems may be interconnected, so that it is possible to open a service over multiple management regions.

The realization of TMN may be divided into two parts: Part 1, a system for monitoring and controlling telecommunication resources below the network layer is established, so that interface communication may be realized between sub-networks, thus a transparent controlling and monitoring may be realized on local network, access network and Synchronous Digital Hierarchy (SDH); Part 2, a decision-supporting system of the telecommunication network is established on the network layer, so that management services facing the 21^{st} century may be developed, such as user management, network provision management labor force management, billing, charging and accounting management, QoS and network performance management, traffic measurement and analysis management, maintenance management, security management, log management, etc.

Most of the TMN system configuration information models employ the hierarchical structure of a tree to describe the hierarchical structure of the configuration model, which is referred to as a configuration information model tree.

In the so called information models, the network resources are divided into many small units that need to be managed from the viewpoint of management, then these small units are abstracted so as to generate Management Objects (MOs). In brief, the information model is an MO set abstracted from the resources managed by the network management system. Resource management is implemented indirectly by processing these resource abstract entities, MOs. A manager that is responsible for issuing a command and an agent that is responsible for executing the command are needed, so as to accomplish a management operation by using the MOs exchange information. To accomplish the command, the agent should know the object to be processed, such as its name, attribute, subordination, etc. All of such information is obtained from a Manager Information Base (MIB). The information in the MIB is organized organically according to a rule. By employing the method of information models, the MIB arranges the abstracted MOs logically from top to bottom according to a rule of subordination and derivation, so that a tree structure is formed. In other words, the above information model tree that facilitates searching is established.

In the OMA Device Management (DM) specification, a TMN technology for managing, diagnosing and maintaining a terminal is worked out, and a server may perform management operations, such as firmware update, application download, diagnostic and monitoring, backup and restore and so on, for a terminal via the DM management tree. The terminal may be a mobile phone, a Personal Digital Assistant (PDA), a NoteBook computer, a embedded device, an on-board system, etc.

The existing OMA DM specification provides a software component management technology, i.e., a mechanism for a DM server to manage the software component on the terminal.

The software component may be an executable application, a dynamic link library, a user interface (UI) and so on. The management operation may be terminal parameter configuration, firmware update, fault diagnostic, backup or restore, as well as the query, installation, update, activation or removal of the software component.

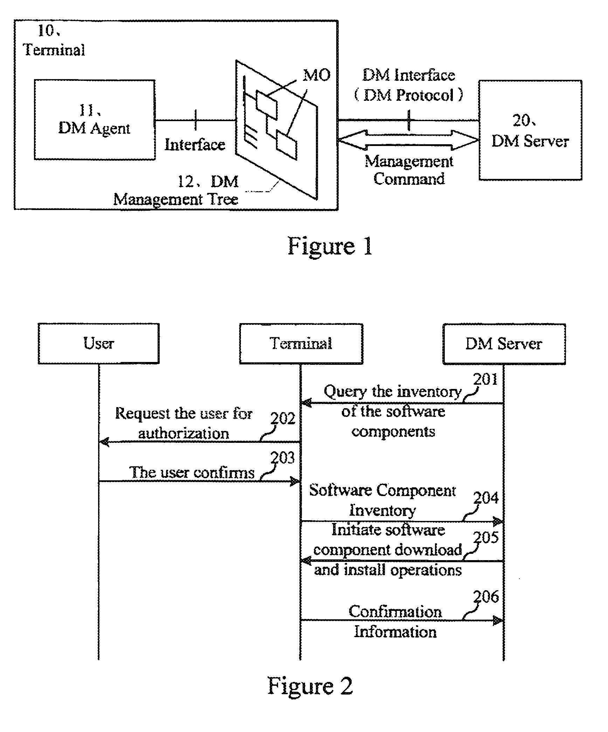

The overall structure described by the DM specification is as shown in Figure 1. The DM Agent 11 on the terminal 10 is adapted to interpret and execute a management command issued by the DM server 20. The DM management tree 12 stored on the terminal may be regarded as an interface for the DM server 20 to manage the terminal 10 via the DM protocol. The DM management tree 12 includes some basic MOs. The DM server 20 controls the resources of the terminal 10 via the operation on the MOs. For example, the management on the software component may be implemented by adding, removing and modifying the Software Component Management Object (SCoMO) on the terminal 10.

In the DM specification, the method for managing software component is as shown in Figure 2.

In Step 201, a DM server queries the inventory of the installed software components from a terminal.

In Step 202, the terminal requests authorization from the user.

In Step 203, the user confirms the authorization.

In Step 204, the terminal sends a software component inventory to the DM server.

In Step 205, the DM server initiates a software component downloading and installation operation to the terminal.

In Step 206, the terminal returns the confirmation to the DM server.

During the research, the inventor finds that the above solution has the following disadvantages; only the static state, such as the adding, removing and modifying of the software component, can be controlled; to effectively receive the service distributed by the network side all the time, the terminal has to keep its service function, such as service receiver, in Running state, and when no service is to be received, a service function in Running state may cause the corresponding hardware resources to consume unnecessary electric energy, thus the power consumption of the communication terminal may be great, and meanwhile, the resources such as the Central Processing Unit (CPU) of the terminal may be occupied. As a result, waste may be caused.
One Internet public document "Software Component Management Object, Draft Version 1.0" is published on April 01, 2005, numbered XP-002595553, and retrieved from the Internet: URL: http://member.openmobilealliance.org/ftp/Public documents/DM/SCOMO/2005/OMA-DM-SCOMO/2005/OMA-DM-SCOMO-2005-0002R01-Software_component_Management.zi p>. This document provides a standard DM management object and associated client and server-side behavior necessary to manage mobile device's software components. Chapters 6.1 discloses a Figure or the management object which includes an activate node and an deactivated node. Chapters 6.2 discloses Software Component Management Object Parameters, wherein the Activate node is used with Exec command to start the Activate operation: to transfer the deployed Deployment Component from Inactive state to Active state; and the Deactivate node is used with Exec command to start the Deactivate operation: to transfer the deployed Deployment Component from Inactive state to Active state.
The patent WO 2004/054205 A1 discloses a method and system for a network having multimedia messaging service (MMS) capability allowing downloading of one or more MMs from a server to a client. The client (1) and/or the server is capable of generating commands for suspending and resuming downloading of the multimedia message.

### Summary of the Invention

An embodiment of the invention provides a method for managing communication terminal device, which includes: configuring or adding a management tree node to a device management tree of a terminal, wherein the management tree node is an indication node; sending a device management command, which comprises a control instruction on an activity state of a designated function by modifying value of the indication node on the device management tree of the terminal; monitoring, by ther terminal, a change of the value of the indication node and notifying an execution environment of the designated function of the change; and performing, by the execution environment of the designated function, the operation on the function according to the change of the value of the indication node; wherein the activity state of the designated function comprises a running state and a not-running state, and the control instruction comprises starting and stopping the designated function in the terminal.

An embodiment of the invention further provides a corresponding communication terminal, which includes: a function module, adapted to provide a function; a device management agent, adapted to receive and resolve a device management command, wherein the device management command comprises an control instruction on the activity state of a designated function, and maintain a device management tree and operate a management tree node of the device management tree according to the device management command, characterized in that, wherein the management tree node is an indication node, the operation the management tree node of the device management tree according to the device management command is modifying value of the indication node; a state monitoring module is adapted to monitor a change of the value of the indication node and notify the device management service function client of the change; and an device management service function client, adapted to
perform an operation on the activity state of the designated function according to the value of the indication node; wherein the activity state of the designated function comprises a running state and a not-running state, and the control instruction comprises starting and stopping the designated function in the terminal.

It may be found by comparison that: in the technical solution of the invention, DM technology is reinforced, so that it may have the function of remotely controlling the activity state of an application, for example, controlling the start, stop or suspend and resume of an application.

Before carrying out a service, an application related to the service may be started remotely on a terminal by a DM server in advance, so that it can be guaranteed that the service may operate normally. Because the related application may be started in time before a service needs to be carried out, the application no longer needs to be run on the terminal all the time. Therefore, the precious electric energy on the terminal may be saved.

When a service is being carried out, an application related to the service that is running on the terminal may also be suspended remotely by the DM server, so that the CPU resources of the terminal occupied by the application may be decreased when the application does not need to be run, and meanwhile the electric energy of the terminal may be saved. When the application needs to be run again, because the resources occupied by the application, except for the CPU, are not released, the Running state of the application may be resumed rapidly by sending a remote resume instruction to the terminal via the DM server. As a result, the user experience may be reinforced.

Additionally, the related application may also be started immediately when a service is carried out, or the related service function may be started at predetermined service distribution time according to a pre-established service distribution plan. The requirements of different services can be better met by using these two modes flexibly.

### Brief Description of the Drawings

Figure 1 is a schematic diagram showing the overall structure described in the OMA DM specification in the related art;

Figure 2 is a flow chart of the software component management method in the OMA DM specification in the related art;

Figure 3 is a schematic diagram showing the state transition when a service function is started or stopped according to the invention;

Figure 4 is a flow chart of the method for starting or stopping a communication terminal function according to a first embodiment of the invention;

Figure 5 is a flow chart of the method for starting or stopping a communication terminal function according to a second embodiment of the invention;

Figure 6 is a flow chart of the method for starting or stopping a communication terminal function according to a third embodiment of the invention;

Figure 7 is a structural representation of the communication terminal according to one embodiment of the invention;

Figure 8 is a structural representation of the system for communicating between the communication terminal and the server side according to the fourth embodiment of the invention;

Figure 9 is a structural representation of the service function management system according to the fourth embodiment of the invention;

Figure 10 is a partial structural representation of the DM tree according to the fourth embodiment of the invention;

Figure 11 is a structural representation of the system for starting or stopping a function by invoking the corresponding function via a Scheduling Enabler according to the fourth embodiment of the invention;

Figure 12 is a flow chart of the method for suspending or resuming a communication terminal function according to a fifth embodiment of the invention;

Figure 13 is a schematic diagram of the state transition between the suspend and resume of a function according to the fifth embodiment of the invention;

Figure 14 is a structural representation of the system for suspending or resuming a function according to a sixth embodiment of the invention;

Figure 15 is a partial structural representation of the DM tree according to the sixth embodiment of the invention;

Figure 16 is a partial structural representation of the DM tree according to the sixth embodiment of the invention; and

Figure 17 is a partial structural representation of the DM tree according to the sixth embodiment of the invention.

### Detailed Description of the Embodiments

To make the objects, technical solutions and advantages of the invention more apparent, the invention will now be further described in detail in conjunction with the drawings.

In the invention, the service provider sends a message which includes a control instruction on the activity state of a designated function, to a terminal, and the terminal performs the corresponding control operation on the designated function according to the control instruction contained in the message. The control operation includes operations of start, stop, suspend, resume and so on.

The so-called function in the present specification is a general term, which may be a software executable in the execution environment of the terminal, a segment of a program, a procedure, a segment of a script language (such as XML) and so on. For example, the function may be a diagnostic process, a Trap function or a Scheduling Component, etc.

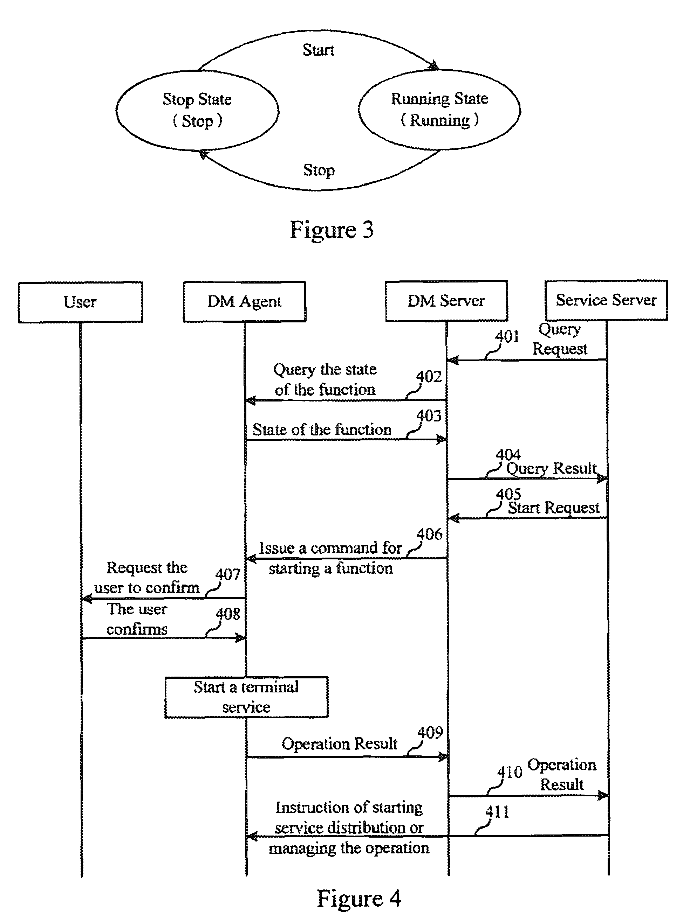

In the embodiments of the invention, a state transition of the function is as shown in Figure 3, which has two status: Stopped state and Running state. It is possible to perform the start operation on the function only when the function is in Stopped state, and perform the stop operation on the function only when it is in Running state.

Additionally, the service provider may also send a message which includes an instruction to suspend or resume a designated function, to the terminal via the DM server, and the terminal suspends or resumes the designated function according to the instruction contained in the message. It is possible to perform the suspend operation only when the function is in Running state.

The method for starting or stopping a communication terminal function according to the first embodiment of the invention is as shown in Figure 4. It is supposed that the Diagnostic Function that needs to be started in the current terminal is in Stopped state.

In Step 401, when a service needs to be carried out for a terminal, a service provider first submits a query request to a DM server. For example, a service server on the network side instructs the DM server to query whether the function of the service on the terminal is started, i.e., whether the function is in Running state.

Specifically, the main command of the query is as follows:

```
    <Get>
     <Item>
      <Target>
        <LocURI>./Diagnostic Function/State Value (./BCAST client/state value) </LocURI>
      </Target>
     </Item>
    </Get>
```

In Step 402, the DM server issues a device management command and queries the current state of the function from the terminal. The DM server and the DM Agent of the terminal interact with each other via the standard OMA DM protocol.

In Step 403, the terminal returns a query result:

```
    <Results>
     <Item>
      <Source>
       <LocURI>./Diagnostic Function/StateValue </LocURI>
       </Source>
      <Data>Stopped</Data>
     </Item>
    </Results>
```

It is supposed that the result obtained is that the function is in Stopped state.

In Step 404, the DM server returns the query result to the service server.

In Step 405, according to the query result, if the service function that needs to be started is not started, the service server sends a message to the DM server and delivers an operation instruction to start the function in the message.

In Step 406, the DM server forwards the message to the DM Agent of the terminal, and issues a management command to start a Diagnostic Function on the terminal:

```
    < Exec>
        <Item>
            <Target>
                <LocURI>./Diagnostic Function/Operations/Start </LocURI>
            </Target>
        </Item>
    </Exec>
```

In Step 407, after receiving the DM command, the DM Agent determines whether the source of the DM command is valid. If it is valid, the DM Agent interprets the message and obtains the operation instruction contained in the message; otherwise, the DM Agent rejects the DM command.

As for the problems of security, privacy and so on, the DM Agent further sends an enquiry message to the user via the UI of the terminal according to the operation instruction, and requests the user to determine whether to accept the service.

If the user has configured a default operation on the service, the DM Agent does not need to perform the process for obtaining the confirmation from the user. Instead, the DM Agent processes the command issued by the DM server directly according to the default operation configured, and then turns to Step 409.

In Step 408, the user may confirm the service via the UI. If the user does not want to accept the service or if it is inconvenient for the user to accept the service, the user may perform a cancellation operation. If the user accepts the service, an admission operation is performed, If the user neither performs a cancellation operation nor performs an admission operation, a default processing mode may be configured. For example, it may be regarded that the user rejects the service.

The confirmation message (accept or reject), for example, which indicates that the user accepts the service, is returned to the DM Agent via the UI of the terminal.

The above Step 407 and Step 408 are optional. The user may preset a policy to trigger user confirmation in the terminal. For example, when the server sends a command to control the function for the first time, the user needs to confirm, but afterwards, the server may send a command directly to control the function.

In Step 409, the terminal executes the command sent by the DM server and starts the function of the service based on the user admission. A DM tree may be stored in the terminal, which includes a node for starting a function and a node for stopping a function. If the two nodes are both executable nodes, the DM Agent directly triggers the corresponding executable node according to the control instruction included in the command sent by the DM server, so as to perform the corresponding start or stop operation on the designated function via an enabler module of a DM service function client If the two nodes are both indication nodes in the DM tree, the DM Agent modifies the value of the corresponding indication node according to the instruction in the command sent by the DM server, and the terminal performs the corresponding start or stop operation on the designated function by monitoring the change in the value of the indication node.

After the corresponding start (or stop) operation is performed, the operation result is reported to the DM server.

```
    < Alert>
        <CmdID>2</CmdID>
        <Data> 1226</Data> <--Generic Alert -->
        <Item>
           <Source><LocURI>./Diagnostic Function/Operations/Start
    </LocURI>
    </Source>
    <Meta>
            <Type>org.openmobilealliance. Diagnosticfunction.start</Type>
             <Format>null</Format>
           </Meta>
           <Data>200</Data> < -- OK! --> (command execution successful)
        </Item>
    </Alert>
```

If the user rejects the service according to the determination, the DM server is notified to terminate the service request.

In Step 410, the DM server notifies the service server of the operation result.

In Step 411, when the received operation result indicates that the terminal service is started, the service server establishes a contact with the terminal and begins to distribute a service to the terminal or manage the service. If the returned operation result indicates that the terminal service is stopped, the connection with the terminal is disconnected, and the distribution or management operation on the service for the terminal is stopped.

According to the above method, the related function may be started in time before a service needs to be carried out, and the function no longer needs to be run on the terminal all the time, so that the precious electric energy on the terminal may be saved. Additionally, the function that is started or stopped remotely may be a diagnostic function, and the network side may thereby obtain the information such as whether other functions are normal, the state of a designated function and so on. Thus, the working state of the terminal may be monitored flexibly.

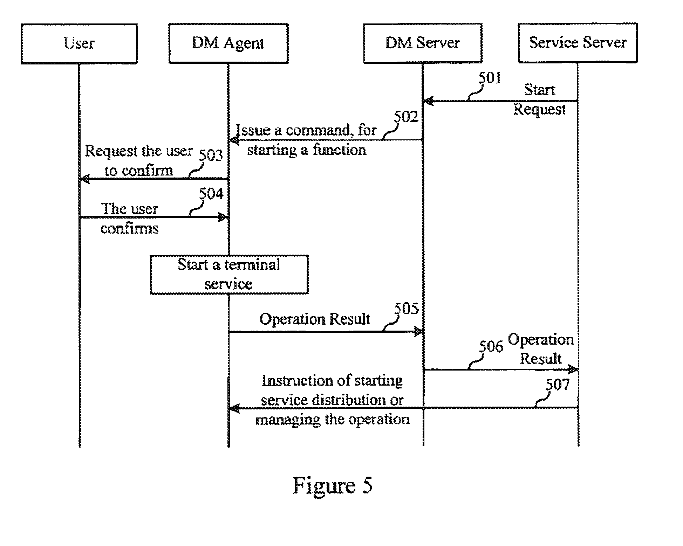

The method for starting or stopping a communication terminal function according to the second embodiment of the invention is as shown in Figure 5. It is supposed that the function that needs to be started in the current terminal is in Running state, and the network side controls the service via a service server. The main difference between this embodiment and the previous embodiment lies in that: the activity state of the designated function in the terminal may not be queried before the service server sends a control instruction. Instead, the control instruction is sent directly as required by the current service, and the terminal determines to execute or ignore the control instruction according to the current activity state of the designated function. In this embodiment, it takes the case that the DM server sends a start instruction as an example, and the others instructions may be known by analogy.

In Step 501, a service server sends a start instruction of the function needed by a service to a DM server.

From Step 502 to Step 504 are similar with from Step 406 to Step 408 respectively.

In Step 505, after obtaining the user admission, the DM Agent executes or ignores the start instruction according to the state of the designated function in the terminal. For example, if the designated function is in Running state, the instruction to start the designated function in the DM command is ignored.

If the designated function in the terminal is in not-Running state, the instruction to start the designated function in the DM command is executed.

Then, the operation result, i.e., the function is in Running state currently, is reported to the DM server. Additionally, if the user confirmation message is Reject, the DM server is notified to terminate the service request.

Step 506 and Step 507 are similar to Step 410 and Step 411 respectively, so they will not be described again here.

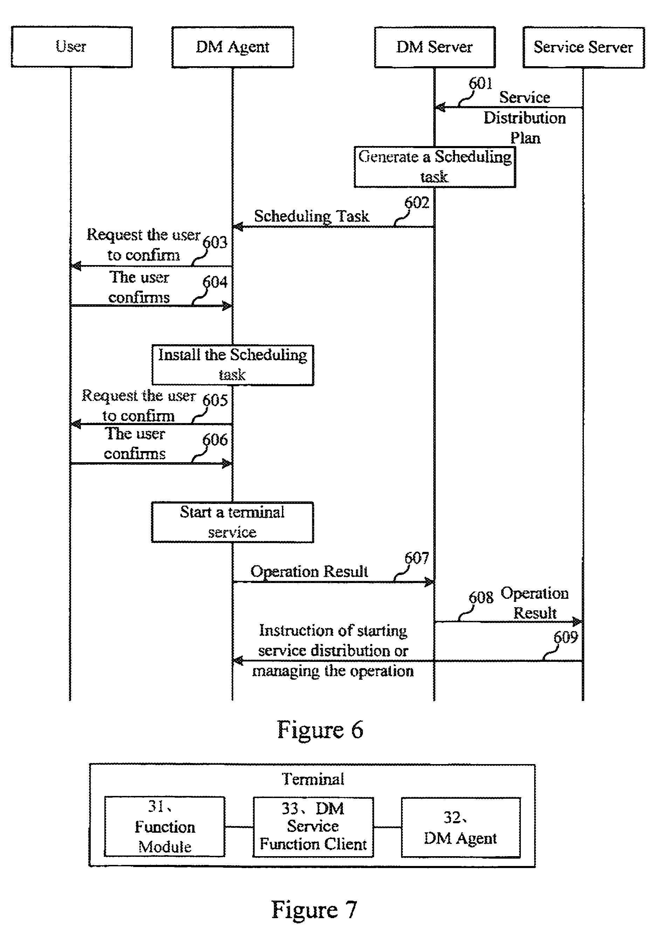

The method for starting or stopping a communication terminal function according to the third embodiment of the invention is as shown in Figure 6. In this embodiment, it is supposed that the function that needs to be started in the current terminal is in Stopped state.

In Step 601, a service server makes a service distribution plan or a service management plan. The plan may be based on time. For example, the BCAST server may broadcast a service to the terminal at 10:00-11:00 and 16:00-17:00 every day according to a timetable, and instructs the terminal to start the BCAST client according to the time segment in the timetable. The plan may also be based on the event on the terminal For example, the terminal is instructed to stop the function automatically when the automatic update of the function is finished.

Then, the service server submits the service distribution plan to the DM server via a Web Service Interface (WSI) of the DM server. The service distribution plan includes the function ID, time or condition, and so on,

In Step 602, the DM server generates a Scheduling according to the service distribution plan submitted by the service server. The Scheduling includes a trigger condition and a predetermined operation. For example, the trigger condition is 10:00 AM, and the predetermined operation is to start a BCAST function on the client.

Then, the DM server sends the Scheduling generated to the DM Agent of the terminal via the standard OMA DM protocol.

In Step 603, the DM Agent requests the user to determine whether to install the Scheduling via the UI of the terminal.

If the user sets a default operation for the service, the DM Agent does not need the user confirmation, and directly processes the Scheduling according to the default operation, and turns to Step 606.

In Step 604, the user may confirm the Scheduling via the UI. If the user does not want to accept the service or if it is inconvenient for the user to accept the service, the user performs a cancellation operation. If the user accepts the service, he performs an admission operation. If the user neither performs a cancellation operation nor performs an admission operation, a default processing may be performed. For example, it may be regarded that the user rejects the service.

The confirmation message (accept or reject), for example, which indicates that the user accepts the service, is returned to the DM Agent via the UI of the terminal.

Additionally, the user may also modify the Scheduling via the UI. For example, the user may modify the timetable, so that the broadcast is received only in the time segment of 10: 00-11:00.

The DM Agent instructs the terminal to install the Scheduling and run the Scheduling according to the user admission or modification. If the user confirmation message is Install Rejected, the Scheduling is cancelled.

In Step 605, when the trigger condition of the Scheduling is met, for example, when the time reaches 10: 00 or the function update is completed, the user is requested to confirm whether to perform the start or stop operation of the function corresponding to the Scheduling, for example, whether to begin to receive the broadcast service.

However, a default operation may also be configured, and the default operation may be performed accordingly, rather than requesting the user to confirm.

Step 606 is similar to Step 408.

In Step 607, the DM Agent performs the predetermined operation in the Scheduling based on the user admission, and starts the function that is in activated state currently (or stops the function, for example the DM Agent performs a stop operation at 11: 00), and returns an operation result to the DM server.

If the function is in Running state when the terminal performs the start (or stop) operation, the start (stop) instruction in the DM command is ignored.

Step 608 is similar to Step 410, so it will not be described again here.

In Step 609, the service server establishes a contact with the terminal and starts the service distribution or service management if the operation result returned is Start. If the returned operation result is Stop, the connection with the terminal is interrupted, and the service with the terminal or the management operation is stopped.

The related service function may be started immediately when the service is carried out, or may be started at a predetermined service started time according to a pre-established service started plan. The requirements of different services can be better met by using these two modes flexibly.

The structure of the communication terminal according to the fourth embodiment of the invention is as shown in Figure 7. The communication terminal includes: one or more function modules 31, which are adapted to provide a function for implementing various services; a DM Agent 32, which is adapted to receive and resolve a device management command from a DM server on the network side, obtain the corresponding control instruction, and then operate and maintain the DM tree; and one or more DM service function clients 33, which are adapted to perform the corresponding control operation on the activity state of the designated function according to the control instruction obtained by DM Agent 32.

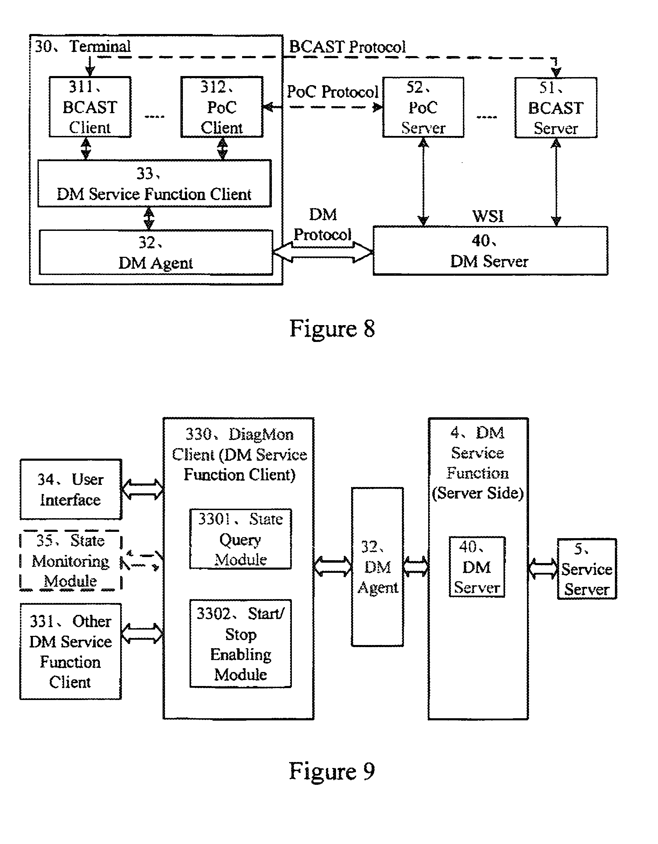

Taking the function of the BCAST service and PoC service as an example, the structure of the system for implementing communication among the communication terminal 30, the DM server 40 and the service server is as shown in Figure 8. The function module of the BCAST service is configured in the BCAST client 311, the function module of the PoC service is configured in the PoC client 312, and services are distributed by the BCAST server 51 and PoC server 52 with the BCAST protocol and PoC protocol respectively. DM Agent 32 manages the service client via the DM service function client 33. According to the specific service function, the DM service function client may be an Application Management client, a Diagnostic and Monitoring (DiagMon) client, a Scheduling client, etc.

Figure 9 is a structural representation of the service function management system in which the DM service function client is specifically a DiagMon client. In Figure 9:

the DM Agent 32 interprets the device management command issued by the DM server 40 and provides the control instruction therein to the DiagMon client 330.

The DiagMon client 330 mainly includes the following modules:

a state query module 3301, which is adapted to support the DM server 40 to query the state of a function on the terminal;

a start/stop enabling module 3302, which is adapted to support the start and stop of the software. The terminal may realize the start and stop of a function by controlling the related executable node via the start/stop enabling module after a command sent by the DM server 40 is received. The start/stop enabling module is a logic function module, which may lie in the DM service function client, or in other position.

The DM service function server 4 mainly includes the DM server 40, the DM server is adapted to send a management instruction to a terminal and receive a message returned by the terminal.

The Service server 5 and the server 4 interact with each other via a WSI interface.

The user interface 34 is adapted to send an authorization request to a user and accept an authorization from the user when the DiagMon client 330 executes a control instruction.

The DiagMon client 330 may also interact with other DM service function clients 331, such as the application management clients, Scheduling client, etc.

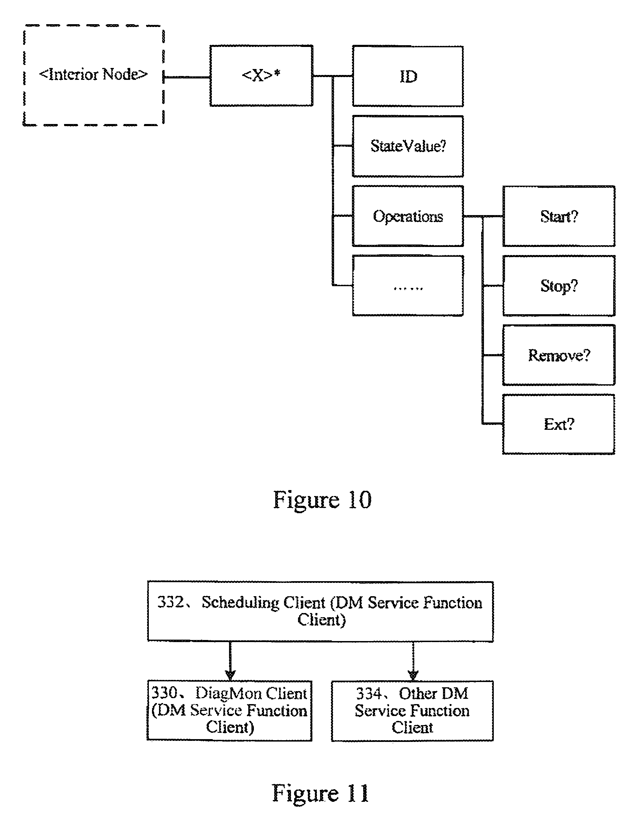

The DM Agent may provide a control instruction to the DM service function client by operating the node of the DM tree. Corresponding to Figure 9, the DM tree may include a node for starting a function and a node for stopping a function. If these two nodes are executable nodes, the executable nodes may be triggered directly to implement the start or stop operation of the function via the DM command sent by the DM server. If the two nodes are indication nodes, the DM Agent may modify the value of the indication node according to the instruction in the DM command, and the terminal may employ a state monitoring module 35 as shown by the dashed part in Figure 9 to monitor the change in the value of the indication node, and notify the DM service function client to perform the corresponding start or stop operation according to the change in the value of the indication node. A partial structure of the DM tree is as shown in Figure 10.

< Interior Node/ x>

| Tree Node | Format | Access Right |
|---|---|---|
| Zero Or More | Node | Replace, Get |

<Interior Node> means interior node, which is the root node of the service function MO. The MO may be a ScoMO, a DiagMon MO, a Scheduling MO or an Application Management MO, etc.

<x> is a placeholder, the specific information and the related executable operation of the function installed is stored under this node.

For convenience, < Interior Node/x> is replaced by < ./x> in the description below.

Specifically, < ./x/ID> (ID)

| Tree Node | Format | Access Right |
|---|---|---|
| One | Chr | Replace, Get |

The software ID is stored in this node.

< ./x/StateValue> (State)

| Tree Node | Format | Access Right |
|---|---|---|
| Zero Or More | Chr | Replace, Get |

This node indicates the state of the software. The value of the node may be as follows:

| State | Description |
|---|---|
| Stopped | The function is in Stopped state. |
| Running | The function is in Running state. |

< ./x/Operations> (Operation)

| Tree Node | Format | Minimal Access Right |
|---|---|---|
| One | Node | Get |

This node is the father node of a series of executable nodes.

< ./x/Operations/Start> (Start Operation)

| Tree Node | Format | Minimal Access Right |
|---|---|---|
| Zero Or One | Null | Exec, Get |

This node is an executable node, which is adapted to start a function or a process. For example, 0 indicates the initial state or the completion of an operation, and 1 indicates that the function needs to be started.

< ./x/Operations/Stop> (Stop Operation)

| Tree Node | Format | Minimal Access Right |
|---|---|---|
| Zero Or One | Null | Exec. Get |

This node is an executable node, which is adapted to stop a function or a process. For example, 0 indicates the initial state or the completion of an operation, and 1 indicates that the function or process needs to be stopped.

The Start and Stop node may also be referred to as Run node, Exit node etc. The specific interpretation and execution are accomplished by a service function module of the terminal.

< ./x/Operations/Remove> (Remove Operation)

| Tree Node | Format | Minimal Access Right |
|---|---|---|
| Zero Or One | Null | Exec, Get |

This node is an executable node, which is adapted to uninstall a function or a process. For example, 0 indicates the initial state or the completion of an operation, and 1 indicates that the function should be removed.

< ./x/Operations/Ext> (Extensible Operation)

| Tree Node | Format | Minimal Access Right |
|---|---|---|
| Zero Or One | Node | Get |

This node is reserved for future extension.

In the above embodiments, although the Start node and Stop node are defined in each service function MO, the start and stop of a function may also be implemented by invoking these nodes in the Scheduling mode, as shown in Figure 11. Specifically, there are two implementation modes:

Mode 1: The communication terminal receives a predetermined task, which includes a command (instruction) to start or stop a terminal function. The terminal starts the Scheduling client 332. and invokes the corresponding DM service function client, such as the DiagMon client 330, when the condition is met. The executable node that is adapted to start or stop a function is executed, so as to start or stop the designated function. However, other DM service function clients 334 may also be invoked according to a specific control instruction.

Mode 2: The communication terminal receives a predetermined task, which includes a segment of a code or a function, for starting or stopping a terminal function. The terminal starts the Scheduling client 332, and a bottom-layer operating system executes the segment of the code or the function in the predetermined task to start or stop the designated function when the condition is met.

Additionally, an interface may also be provided on the basis of the above embodiment, so that the user may configure whether it needs to prompt to the user for confirmation before the function is started. For example, the user may configure as follows: when the server sends a command to start the function for the first time, the user needs to confirm; but afterwards, the function may be directly started without the confirmation of the user. Thus, unnecessary confirmation may be avoided in a specific application environment, and the service experience of the user may be improved.

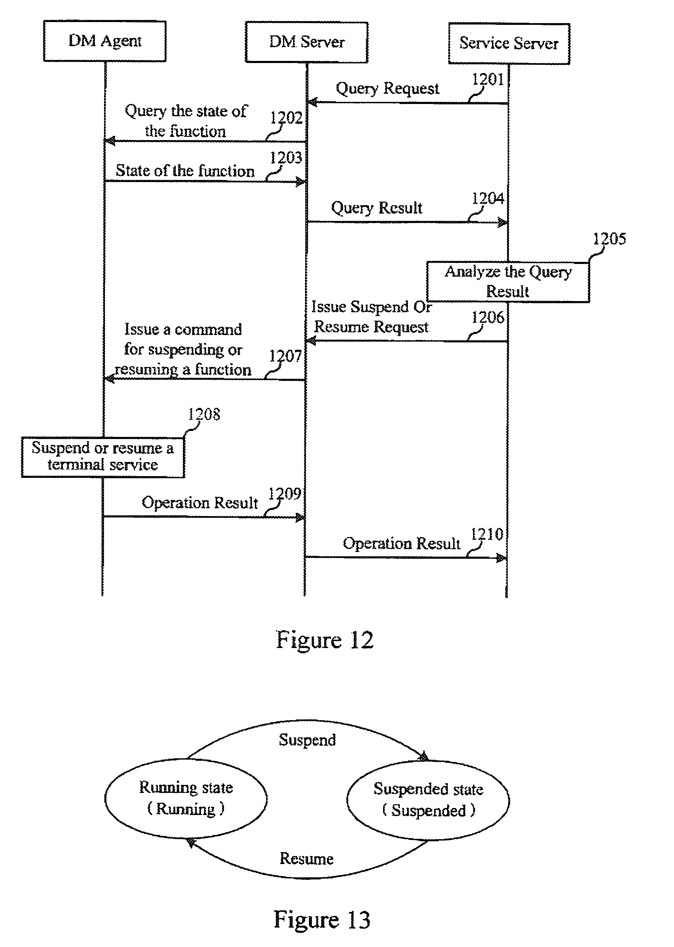

The method for suspending or resuming a communication terminal function according to the fifth embodiment of the invention is as shown in Figure 12. It is supposed that the function that needs to be suspended or resumed in the current terminal is in Running state. The state transition between the suspending and resuming of a service function in Running state is as shown in Figure 13, and there are two states, i.e. Running state and Suspended state.

Specifically, the suspend operation may only be performed on a function when the function is in Running state, so that the function may turn to Suspended state; and the resume operation may only be performed on the function when the function is in Suspended state, so that the function may turn to Running state.

From Step 1201 to Step 1204 are similar with from Step 401 to Step 404.

In Step 1205, the service server analyzes the current state of the designated function received and determines whether to send an instruction to suspend or resume a designated function to the terminal. Because the suspend operation may be performed on the function only when the function is in Running state, and the resume operation may be performed on the function only when the function is in Suspended state, if the designated function is in Running state when a suspend instruction is to be sent, or if the designated function is in Suspended state when a resume instruction is to be sent, Step 1206 is executed; otherwise, the process ends.

In Step 1206, the service server sends a suspend request or a resume request, which includes an instruction to suspend or resume a designated function, to the terminal. By suspending the designated function that is in Running state, the CPU resources of the terminal occupied by the function may be reduced when it is not necessary to run the function, and meanwhile, the electric energy of the terminal may be saved.

In Step 1207, the DM server sends the corresponding suspend or resume command to the DM Agent in the terminal according to a request from the service server.

In Step 1208, after the DM Agent receives the DM command from the DM server, if the node for suspending and resuming a function in the DM tree of the terminal is an executable node, the DM Agent triggers the corresponding executable node directly according to the control instruction contained in the DM command, and the designated function is suspended or resumed by the enabling module in the DM service function client If the node for suspending and resuming a function in the DM tree of the terminal is an indication node, the DM Agent modifies the value of the corresponding suspend indication node or resume indication node according to the instruction in the DM command, and then the terminal suspends or resumes the function correspondingly by monitoring the change in the value of the indication node.

If the designated function is suspended, the function does not occupy the CPU resources of the terminal, but still keeps the occupation of other resources. When it is required to run the function again, the Running state of the function may be resumed rapidly by sending a remote resume instruction via the DM server, because the resources of the terminal occupied by the function, except for CPU resources, are not released. Therefore, the user experience may be reinforced.

Step 1209 and Step 1210 are similar to Step 409 and Step 410, so they will not be described again here.

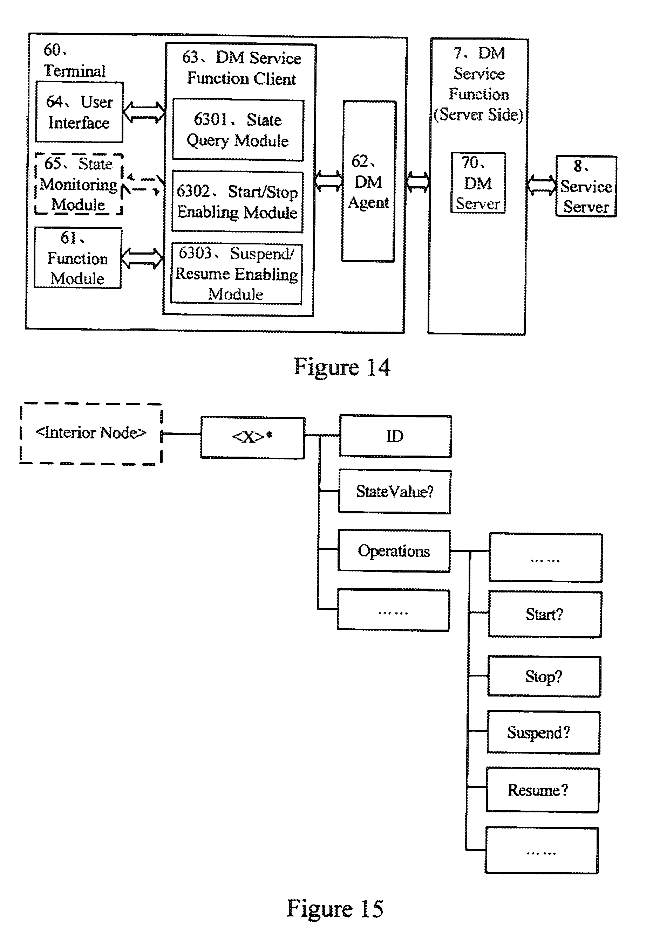

The structure of the system for suspending and resuming a function according to the sixth embodiment of the invention is as shown in Figure 14, which includes a terminal 60, a DM service function server 7 and a service server 8.

The DM service function server 7 mainly includes a DM server 70. The DM server is adapted to send a management command to the terminal 60 and receive a message returned by the terminal.

The service server 8 and the server 7 interact with each other via a WSI interface.

The terminal 60 includes a function module 61, a DM Agent 62, a DM service function client 63 and a user interface 64.

The function module 61 provides a function and an execution environment thereof, and is responsible for controlling the actual execution of the operation, such as start, stop, suspend and so on. The execution environment may be Java or a local application platform.

The DM Agent 62 is responsible for interpreting and executing the fundamental DM protocol between the DM Agent 62 and the DM server 70, and obtaining a control instruction related to the function management, including operation, command and so on. The DM Agent 62 is also responsible for maintaining a DM tree, such as DiagMon MO. Relevant information of diagnostic functions, such as the function ID, name, operation, is stored on a DiagMon management tree. The operation includes start, stop, suspension, resume and so on.

The DM service function client 63 is adapted to control the activity state of the designated function according to the control instruction obtained by the DM Agent 62. The DM service function client 63 mainly includes a state query enabling module 6301 and a start/stop enabling module 6302, the functions of which are similar to those of the modules with the same name modules in the fourth embodiment. The DM service function client 63 further includes a suspend/resume enabling module 6303, which is adapted to support suspending and resuming a function in Running state.

The user interface 64 is adapted to send an authorization request to a user and accept an authorization admission from the user when the DM service function client 63 executes a control command.

The DM Agent may provide a control instruction to the DM service function client by operating a node of the DM tree. Corresponding to Figure 14, the DM tree may include a node for suspending a function and a node for resuming a function. If these two nodes are executable nodes, the executable node is directly triggered to suspend or resume a function by the DM Agent according to the DM command sent by the DM server. If the two nodes are indication nodes and the state value is stored therein, the DM Agent may modify the value of the indication node according to the instruction in the DM command, and the terminal may employ the state monitoring module 65 as shown by the dashed part of Figure 14 to monitor the change in the value of the indication node, and notify the DM service function client to perform the corresponding suspend or resume operation according to the change in the value of the indication node. The state monitoring module is a logic module, which may be implemented by the enabling module in the DM service function client 63, or it may be implemented by an exterior function or other enabling components.

A partial structure of the DM tree is as shown in Figure 15. When the node for performing suspend operation or resume operation in the DM tree is an indication node, the interpretation is as follows:

< ./x/Operations/Suspend>

| Tree Node | Format | Minimal Access Right |
|---|---|---|
| Zero Or One | Chr | Get, Replace |

This node is adapted to indicate the operation of suspending a function or a process. For example, 0 indicates the initial state or the completion of a suspend operation, and I indicates that the function or process needs to be suspended.

< ./x/Operations/Resume>

| Tree Node | Format | Minimal Access Right |
|---|---|---|
| Zero Or One | Chr | Get, Replace |

This node is adapted to indicate the restart of a function, i.e., a resume operation. For example, 0 indicates the initial state or the completion of a resume operation, and 1 indicates that the function needs to be resumed.

Additionally, if the source information of the operation command needs to be stored, the information may be stored in the <Ext> extension node or in the attribute of the node.

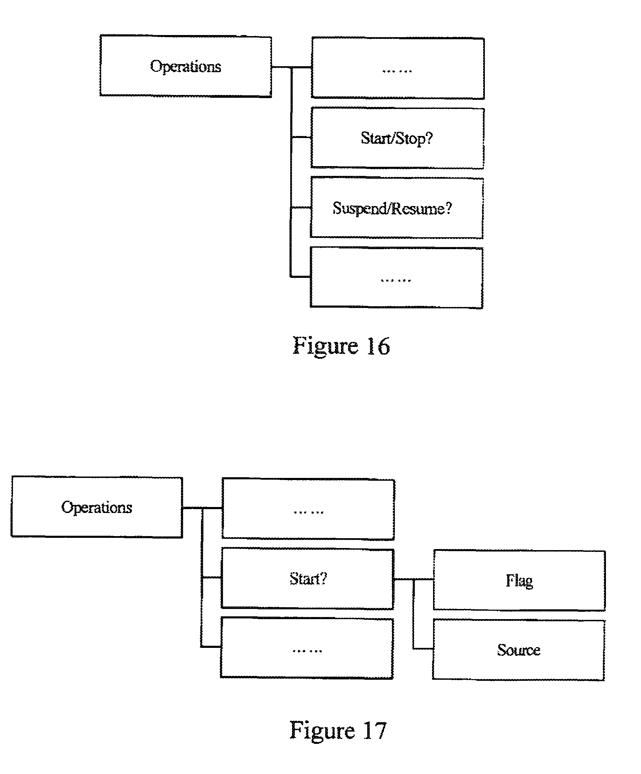

The structure of the DM tree is not limited to the structure as described above. For example, as shown in Figure 16, the start node and the stop node may be combined into one node, and the suspend node and the resume node may also be combined into one node. For the start/stop node, 0 may be employed to indicate the initial state, 1 may be employed to indicate the start of a function or process, 2 may be employed to indicate the stop of a function or process, and 3 may be employed to indicate the completion of an operation. Similarly, for the suspend/resume node, 0 may be employed to indicate the initial state, 1 may be employed to indicate the suspending of a function or process, 2 may be employed to indicate the resume of a function or process, and 3 may be employed to indicate the completion of an operation.

In another example, the structure of the DM tree is as shown in Figure 17. The leaf nodes indicate the state of each node and the information of the source server. A Flag node is employed to indicate the state of an operation command, and a Source node is employed to indicate the source of an operation command, such as, from which server the operation command comes, and so on. When a DM command is received, the validity of the command source may be determined according to the information of the source node.

In the above embodiments, similar to the start and stop node, the Suspend and Resume nodes may also be defined in the SCoMO, which will not be described again here. Additionally, the Suspend and Resume nodes may also have other names.

Additional advantages and modifications will readily occur to those skilled in the art. Therefore, the invention in its broader aspects is not limited to the specific details and representative embodiments shown and described herein. Accordingly, various modifications and variations may be made without departing from the invention as defined by the appended claims.

## Claims

1. A method for managing a communication terminal device, **characterized in** comprising:
configuring or adding a management tree node to a device management tree of a terminal, wherein the management tree node is an indication node;
sending (406) a device management command, which comprises a control instruction on an activity state of a designated function, modifying for a value of the indication node on the device management tree of the terminal;
monitoring, by the terminal,a change of the value of the indication node and notifying an execution environment of the designated function of the change; and
performing, by the execution environment of the designated function, an operation on the designated function according to the change of the value of the indication node;
wherein the activity state of the designated function comprises a running state and a not-running state, and the control instruction comprises starting and stopping the designated function in the terminal.

2. The method for managing the communication terminal device according to claim 1, **characterized in that** the method further comprises:
querying (402) the current activity state of the designated function from the terminal and sending (403) the current activity state to a service server, before the device management command is sent to the terminal, and determining, by the service server, the control instruction in the device management command to be sent according to the current activity state of the designated function;
and/or
determining, by the terminal, the current activity state of the designated function before the terminal performs the operation, and performing a start operation on the designated function in response to the designated function which is in not-running state, and performing a stop operation on the designated function in response to the designated function which is in running state; otherwise, ignoring the control instruction in the device management command.

3. The method for managing the communication terminal device according to claim 1, **characterized in that**, the control instruction further comprises an instruction to suspend or resume the designated function; and
the operation performed on the activity state of the designated function by the terminal according to the control instruction comprises: suspending or resuming the designated function in the terminal.

4. The method for managing the communication terminal device according to claim 3, **characterized in that**, the activity state of the function comprises the running state and a Suspended state; and the method further comprises:
querying (402) a current activity state of the designated function from the terminal and sending (403) the current activity state to a service server, before the device management command is sent to the terminal, and determining, by the service server, the control instruction in the device management command to be sent according to the current activity state of the designated function;
and/or
determining, by the terminal, the current activity state of the designated function before the terminal performs the operation, and performing a suspend operation on the designated function in response to the designated function which is in running state, and performing a resume operation on the designated function in response to the designated function which is in Suspended state; otherwise, ignoring the control instruction in the device management command.

5. A communication terminal, comprising:
a function module (31), adapted to provide a designated function;
a device management agent (32), adapted to receive and resolve a device management ! command, wherein the device management command comprises a control instruction on an activity state of the designated function, and maintain a device management tree and operate a H management tree node of the device management tree according to the device management command, **characterized in that** is the management tree node is an indication node the device management agent (32) further adapted to operate the management tree node of the device management tree according to the device management command by modifying a value of the indication node;
the communication terminal further comprising a state monitoring module adapted to monitor a change of the value of the indication node and notify a device management service function client of the change; and
a device management service function client (33), adapted to perform an operation on the activity state of the designated function according to the value of the indication node;
wherein the activity state of the designated function comprises a running state and a not-running state, and the control instruction comprises starting and stopping the designated function in the terminal.

## Patentansprüche

1. Verfahren für das Management einer Kommunikationsendgerätvorrichtung, **gekennzeichnet dadurch, dass** es Folgendes umfasst:
Konfigurieren oder Hinzufügen eines Managementbaumknotens zu einem Vorrichtungsmanagementbaum eines Endgeräts, wobei der Managementbaumknoten ein Indikatorknoten ist;
Senden (406) eines Vorrichtungsmanagementbefehls, der eine Steueranweisung an einen Aktivitätszustand einer bestimmten Funktion enthält, um einen Wert des Indikatorknotens an dem Vorrichtungsmanagementbaum des Endgeräts zu modifizieren;
Überwachen durch das Endgerät einer Änderung des Werts des Indikatorknotens und Melden der Änderung an eine Ausführungsumgebung der bestimmten Funktion; und
Ausführen durch die Ausführungsumgebung der bestimmten Funktion einer Operation an der bestimmten Funktion in Übereinstimmung mit der Änderung des Wertes des Indikatorknotens;
wobei der Aktivitätszustand der bestimmten Funktion einen laufenden Zustand und einen nicht laufenden Zustand umfasst und wobei die Steueranweisung ein Starten und ein Stoppen der bestimmten Funktion in dem Endgerät umfasst.

2. Verfahren für das Management der Kommunikationsendgerätvorrichtung nach Anspruch 1, **dadurch gekennzeichnet, dass** das Verfahren ferner Folgendes umfasst:
Abfragen (402) des momentanen Aktivitätszustands der bestimmten Funktion von dem Endgerät und Senden (403) des momentanen Aktivitätszustands zu einem Dienst-Server, bevor der Vorrichtungsmanagementbefehl zu dem Endgerät gesendet wird, und Bestimmen durch den Dienst-Server der Steueranweisung in dem zu sendenden Vorrichtungsmanagementbefehl in Übereinstimmung mit dem momentanen Aktivitätszustand der bestimmten Funktion;
und/oder
Bestimmen durch das Endgerät des momentanen Aktivitätszustands der bestimmten Funktion, bevor das Endgerät die Operation ausführt, und Ausführen einer Startoperation an der bestimmten Funktion als Reaktion auf die bestimmte Funktion, die in einem nicht laufenden Zustand ist, und Ausführen einer Stopp-Operation an der bestimmten Funktion als Reaktion auf die bestimmte Funktion, die in einem laufenden Zustand ist; andernfalls Ignorieren der Steueranweisung in dem Vorrichtungsmanagementbefehl.

3. Verfahren für das Management der Kommunikationsendgerätvorrichtung nach Anspruch 1, **dadurch gekennzeichnet, dass** die Steueranweisung ferner eine Anweisung enthält, um die bestimmte Funktion auszusetzen oder wiederaufzunehmen; und
die Operation, die an dem Aktivitätszustand der bestimmten Funktion durch das Endgerät in Übereinstimmung mit der Steueranweisung ausgeführt wird, Folgendes umfasst: Aussetzen oder Wiederaufnehmen der bestimmten Funktion in dem Endgerät.

4. Verfahren für das Management der Kommunikationsendgerätvorrichtung nach Anspruch 3, **dadurch gekennzeichnet, dass** der Aktivitätszustand der Funktion den laufenden Zustand und einen ausgesetzten Zustand enthält; und das Verfahren ferner Folgendes umfasst:
Abfragen (402) eines momentanen Aktivitätszustands der bestimmten Funktion von dem Endgerät und Senden (403) des momentanen Aktivitätszustands zu einem Dienst-Server, bevor der Vorrichtungsmanagementbefehl zu dem Endgerät gesendet wird, und Bestimmen durch den Dienst-Server der Steueranweisung in dem zu sendenden Vorrichtungsmanagementbefehl in Übereinstimmung mit dem momentanen Aktivitätszustand der bestimmten Funktion;
und/oder
Bestimmen durch das Endgerät des momentanen Aktivitätszustands der bestimmten Funktion, bevor das Endgerät die Operation ausführt, und Ausführen einer ausgesetzten Operation an der bestimmten Funktion als Reaktion auf die bestimmte Funktion, die in einem laufenden Zustand ist, und Ausführen einer Wiederaufnahmeoperation an der bestimmten Funktion als Reaktion auf die bestimmte Funktion, die in einem ausgesetzten Zustand ist; andernfalls Ignorieren der Steueranweisung in dem Vorrichtungsmanagementbefehl.

5. Kommunikationsendgerät, umfassend:
ein Funktionsmodul (31), das dazu ausgelegt ist, eine bestimmte Funktion bereitzustellen;
einen Vorrichtungsmanagementagenten (32), der dazu ausgelegt ist, einen Vorrichtungsmanagementbefehl zu empfangen und aufzulösen, wobei der Vorrichtungsmanagementbefehl eine Steueranweisung an einen Aktivitätszustand der bestimmten Funktion enthält, und einen Vorrichtungsmanagementbaum aufrechtzuerhalten und einen Managementbaumknoten des Vorrichtungsmanagementbaums in Übereinstimmung mit dem Vorrichtungsmanagementbefehl zu betreiben, **dadurch gekennzeichnet, dass** der Managementbaumknoten ein Indikatorknoten ist, wobei der Vorrichtungsmanagementagent (32) ferner dazu ausgelegt ist, den Managementbaumknoten des Vorrichtungsmanagementbaums in Übereinstimmung mit dem Vorrichtungsmanagementbefehl durch Modifizieren eines Wertes des Indikatorknotens zu betreiben;
wobei das Kommunikationsendgerät ferner ein Zustandsüberwachungsmodul umfasst, das dazu ausgelegt ist, eine Änderung des Wertes des Indikatorknotens zu überwachen und einem Vorrichtungsmanagementdienstfunktions-Client die Änderung mitzuteilen; und
einen Vorrichtungsmanagementdienstfunktions-Client (33), der dazu ausgelegt ist, eine Operation an dem Aktivitätszustand der bestimmten Funktion in Übereinstimmung mit dem Wert des Indikatorknotens auszuführen;
wobei der Aktivitätszustand der bestimmten Funktion einen laufenden Zustand und einen nicht laufenden Zustand umfasst und die Steueranweisung das Starten und Stoppen der bestimmten Funktion in dem Endgerät umfasst.

## Revendications

1. Procédé permettant de gérer un terminal de communication, **caractérisé en ce qu'**il comprend :
la configuration ou l'ajout d'un noeud d'arborescence de gestion à une arborescence de gestion de dispositifs d'un terminal, le noeud d'arborescence de gestion étant un noeud d'indication,
l'envoi (406) d'un ordre de gestion de dispositif, qui comprend une instruction de commande sur l'état d'activité d'une fonction désignée afin de modifier une valeur du noeud d'indication sur l'arborescence de gestion de dispositifs du terminal,
la surveillance, par le terminal, d'une modification de la valeur du noeud d'indication et la notification de la modification à un environnement d'exécution de la fonction désignée, et
l'exécution, par l'environnement d'exécution de la fonction désignée, d'une opération sur la fonction désignée en fonction de la modification de la valeur du noeud d'indication,
dans lequel l'état d'activité de la fonction désignée comprend un état d'exécution et un état d'arrêt d'exécution, et l'instruction de commande comprend le démarrage et l'arrêt de la fonction désignée dans le terminal.

2. Procédé permettant de gérer le terminal de communication selon la revendication 1, **caractérisé en ce que** le procédé comprend en outre :
l'interrogation (402) de l'état actuel d'activité de la fonction désignée à partir du terminal, et l'envoi (403) de l'état actuel d'activité à un serveur de services avant que l'ordre de gestion de dispositif soit envoyé au terminal, ainsi que la détermination, par le serveur de services, de l'instruction de commande dans l'ordre de gestion de dispositif à envoyer en fonction de l'état actuel d'activité de la fonction désignée,
et/ou
la détermination, par le terminal, de l'état actuel d'activité de la fonction désignée avant que le terminal exécute l'opération, et l'exécution d'une opération de démarrage sur la fonction désignée en réponse à la fonction désignée qui se trouve à l'état d'arrêt d'exécution, ainsi que l'exécution d'une opération d'arrêt sur la fonction désignée en réponse à la fonction désignée qui se trouve à l'état d'exécution ; sinon, l'absence de prise en compte de l'instruction de commande dans l'ordre de gestion de dispositif.

3. Procédé permettant de gérer le terminal de communication selon la revendication 1, **caractérisé en ce que** l'instruction de commande comprend en outre une instruction pour suspendre ou pour reprendre la fonction désignée, et
l'opération effectuée sur l'état d'activité de la fonction désignée par le terminal, en fonction des instructions de commande, comprend : la suspension ou la reprise de la fonction désignée dans le terminal.

4. Procédé permettant de gérer le terminal de communication selon la revendication 3, **caractérisé en ce que** l'état d'activité de la fonction comprend l'état d'exécution et un état de suspension, et le procédé comprend en outre :
l'interrogation (402) de l'état actuel d'activité de la fonction désignée à partir du terminal et l'envoi (403) de l'état actuel d'activité à un serveur de services avant que l'ordre de gestion de dispositif soit envoyé au terminal, ainsi que la détermination, par le serveur de services, de l'instruction de commande dans l'ordre de gestion de dispositif à envoyer en fonction de l'état actuel d'activité de la fonction désignée,
et/ou
la détermination, par le terminal, de l'état actuel d'activité de la fonction désignée avant que le terminal exécute l'opération, et l'exécution d'une opération de suspension sur la fonction désignée en réponse à la fonction désignée qui se trouve à l'état d'exécution, ainsi que l'exécution d'une opération de reprise sur la fonction désignée en réponse à la fonction désignée qui se trouve à l'état de suspension ; sinon, l'absence de prise en compte de l'instruction de commande dans l'ordre de gestion de dispositif.

5. Terminal de communication, comprenant :
un module de fonction (31) conçu pour fournir une fonction désignée,
un agent de gestion de dispositif (32) conçu pour recevoir et résoudre un ordre de gestion de dispositif, dans lequel l'ordre de gestion de dispositif comprend une instruction de commande sur un état d'activité de la fonction désignée, et pour maintenir une arborescence de gestion de dispositifs et mettre en oeuvre un noeud d'arborescence de gestion de l'arborescence de gestion de dispositifs en fonction de l'ordre de gestion de dispositif, **caractérisé en ce que** le noeud d'arborescence de gestion est un noeud d'indication, l'agent de gestion de dispositif (32) étant en outre conçu pour mettre en oeuvre le noeud d'arborescence de gestion de l'arborescence de gestion de dispositifs en fonction de l'ordre de gestion de dispositif en modifiant une valeur du noeud d'indication,
le terminal de communication comprenant en outre un module de surveillance d'état conçu pour surveiller une modification de la valeur du noeud d'indication et pour notifier la modification à un client de fonction de service de gestion de dispositif, et
un client de fonction de service de gestion de dispositif (33) conçu pour exécuter une opération sur l'état d'activité de la fonction désignée en fonction de la valeur du noeud d'indication,
dans lequel l'état d'activité de la fonction désignée comprend un état d'exécution et un état d'arrêt d'exécution, et l'instruction de commande comprend le démarrage et l'arrêt de la fonction désignée dans le terminal.
